# EUROPEAN PATENT APPLICATION

(11) **EP 4 806 748 A1**
(43) Date of publication of application: **16.09.2026**
(21) Application number: 24809724.8
(22) Date of filing: 28.10.2024
(51) Int. Cl.: B60W 30/18, B62H 1/12

(54) **CONTROL DEVICE AND CONTROL METHOD**

(30) Priority: 09.11.2023 JP 2023191202
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2024/060584
(87) International publication number: WO 2025/099529

(57) **Abstract**

The present invention provides a controller and a control method that prevent a leaning vehicle from falling over and/or reduce an impact applied to the leaning vehicle and/or a rider of the leaning vehicle due to falling over of the leaning vehicle.
A controller (80) for a leaning vehicle (1) includes an execution unit that executes a safing operation mode in which a safing operation can be executed, the safing operation being a fall-prevention operation that prevents the leaning vehicle from falling over, and/or an impact reduction operation that reduces an impact applied to the leaning vehicle and/or a rider (2) of the leaning vehicle due to falling over of the leaning vehicle (1). During execution of the safing operation mode, the execution unit prohibits the safing operation at a first time point in a first period which is a period from when the leaning vehicle starts deceleration to a time point at which the leaning vehicle is brought into a stopped state or a slow-drive state by the deceleration, and permits the safing operation at a second time point after the first time point in the first period.

## Description

### Technical Field

The present disclosure relates to a controller and a control method for a leaning vehicle.

### Background Art

Various driver assistance technologies for assisting a rider in driving a leaning vehicle have been proposed. For example, PTL 1 discloses a driver assistance system that warns a rider of a leaning vehicle about inappropriately approaching an obstacle based on information detected by a sensor apparatus that detects an obstacle in a traveling direction or substantially in a traveling direction.

### Citation List

### Patent Literature

PTL 1: JP2009-116882A

### Summary of Invention

### Technical Issues

The attitude of a leaning vehicle is more likely to become unstable than a four-wheel vehicle, and a leaning vehicle is more likely to fall over than a four-wheel vehicle. Thus, the safety of a rider needs to be considered.

The present disclosure has been made in view of the above circumference, and an object of which is to obtain a controller and a control method that can ensure the safety of a rider.

### Solution to Issues

According to one embodiment of the present invention, a controller for a leaning vehicle includes an execution unit that executes a safing operation mode in which a safing operation can be executed, the safing operation being a fall-prevention operation that prevents the leaning vehicle from falling over, and/or an impact reduction operation that reduces an impact applied to the leaning vehicle and/or a rider of the leaning vehicle due to falling over of the leaning vehicle. During execution of the safing operation mode, the execution unit prohibits the safing operation at a first time point in a first period which is a period from when the leaning vehicle starts deceleration to a time point at which the leaning vehicle is brought into a stopped state or a slow-drive state by the deceleration, and permits the safing operation at a second time point after the first time point in the first period.

According to one embodiment of the invention, in a control method for a leaning vehicle, an execution unit executes a safing operation mode in which a safing operation can be executed, the safing operation being a fall-prevention operation that prevents the leaning vehicle from falling over, and/or an impact reduction operation that reduces an impact applied to the leaning vehicle and/or a rider of the leaning vehicle due to falling over of the leaning vehicle. During execution of the safing operation mode, the execution unit prohibits the safing operation at a first time point in a first period which is a period from when the leaning vehicle starts deceleration to a time point at which the leaning vehicle is brought into a stopped state or a slow-drive state by the deceleration, and permits the safing operation at a second time point after the first time point in the first period.

### Advantageous Effects of Invention

According to the invention, the execution unit executes the safing operation mode in which the safing operation can be executed, the safing operation being the fall-prevention operation that prevents the leaning vehicle from falling over, and/or the impact reduction operation that reduces an impact applied to the leaning vehicle and/or a rider of the leaning vehicle due to falling over of the leaning vehicle. During execution of the safing operation mode, the execution unit prohibits the safing operation at the first time point in the first period which is a period from when the leaning vehicle starts deceleration to a time point at which the leaning vehicle is brought into a stopped state or a slow-drive state by the deceleration, and permits the safing operation at the second time point after the first time point in the first period. The safing operation may hinder the traveling of the leaning vehicle when executed in a state in which the attitude of the leaning vehicle is stable. Thus, the execution unit prohibits the safing operation at the first time point in the first period in which the deceleration of the leaning vehicle is started. Then, in consideration of the fact that the attitude of the leaning vehicle tends to become unstable as the speed of the leaning vehicle decreases, the execution unit permits the safing operation at the second time point after the first time point, that is, at a time point at which the leaning vehicle is further decelerated. Accordingly, the safing operation is prohibited while the attitude of the leaning vehicle is relatively stable and is permitted at the second time point at which the speed of the leaning vehicle is reduced and the attitude of the leaning vehicle may become unstable. According to the invention, the traveling performance of a leaning vehicle and the safety of a rider can be achieved in a compatible manner.

### Brief Description of Drawings

Fig. 1 is a diagram illustrating a state in which a rider assistance system according to an embodiment of the invention is mounted on a motorcycle.
Fig. 2 is a block diagram illustrating an example of a functional configuration of a controller according to the embodiment of the invention.
Fig. 3 is a flowchart illustrating a control process performed by the controller according to the embodiment of the invention.
Fig. 4 is a flowchart illustrating a control process performed by the controller according to the embodiment of the invention.

### Description of Embodiments

A controller and a control method according to the invention are applied to a leaning vehicle. The leaning vehicle refers to any vehicle that travels in a state of inclining in a turning direction when turning. The leaning vehicle includes, for example, a two-wheeled motorcycle, a three-wheeled motorcycle, and a bicycle. The motorcycle includes, for example, a vehicle using an engine as a drive source and a vehicle using an electric motor as a drive source, and includes a motorbike, a scooter, an electric scooter, and the like. The bicycle refers to any vehicle that can be propelled on a road by a pedaling force of a rider applied to pedals. The bicycle includes, for example, an ordinary bicycle, a power-assisted bicycle, and an electric bicycle.

Configurations, operations, and the like that will be described below are merely examples, and the controller and the control method according to the invention are not limited to such configurations, operations, and the like.

The invention is not limited to the embodiments to be described below. For example, only a part of an embodiment may be implemented.

The same or similar descriptions are simplified or omitted as appropriate. For the same or similar parts in each drawing, the same reference signs are assigned, or assignment of reference signs is omitted. In addition, detailed structures are appropriately simplified or omitted in the drawings.

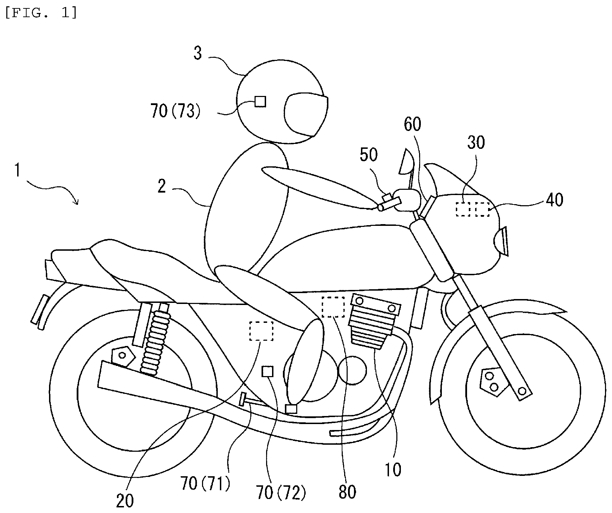

A configuration of a leaning vehicle 1 according to an embodiment of the invention will be described with reference to Fig. 1. Fig. 1 is a schematic diagram illustrating a schematic configuration of the leaning vehicle 1.

According to one embodiment of the invention, the leaning vehicle 1 is a two-wheeled motorcycle. As illustrated in Fig. 1, the leaning vehicle 1 includes a driving apparatus 10, a braking apparatus 20, a vehicle behavior sensor 30, a surrounding environment sensor 40, an input apparatus 50, a notification apparatus 60, a safety apparatus 70, and a controller (ECU) 80.

The driving apparatus 10 is a drive source that can output power for driving wheels. The driving apparatus 10 is an engine, for example. For example, the engine is provided with one or a plurality of cylinders in which a combustion chamber is formed, a fuel injection valve that injects fuel into the combustion chamber, and a spark plug. When fuel is injected from the fuel injection valve, an air-fuel mixture containing air and the fuel is formed in the combustion chamber, and the air-fuel mixture is ignited by the spark plug and burned. As a result, a piston provided in the cylinder reciprocates and a crankshaft rotates. An intake pipe of the engine is provided with a throttle valve, and an amount of intake air to the combustion chamber is changed in accordance with a throttle opening degree which is an opening degree of the throttle valve. A drive source other than the engine (for example, an electric motor) may be mounted as the drive source. Alternatively, a plurality of drive sources may be mounted as the drive source. The driving apparatus 10 may be controlled so as to cause an acceleration in the leaning vehicle 1 or increase the acceleration of the leaning vehicle 1, or may be controlled so as to cause a deceleration in the leaning vehicle 1 or increase the deceleration of the leaning vehicle 1. The driving apparatus 10 is defined to include, for example, a driving operation unit operated by a rider 2 and a drive unit that outputs power for driving the wheels.

The braking apparatus 20 controls a braking force generated at a wheel. The braking apparatus 20 may control a braking force generated at both a front wheel and a rear wheel, or may control only a braking force generated at one of the front wheel and the rear wheel. The braking apparatus 20 may be controlled so as to cause a deceleration in the leaning vehicle 1 or increase the deceleration of the leaning vehicle 1, or may be controlled so as to cause an acceleration in the leaning vehicle 1 or increase the acceleration of the leaning vehicle 1. For example, the braking apparatus 20 is a hydraulic pressure control unit. The hydraulic pressure control unit is provided on an oil passage connecting a master cylinder and a wheel cylinder, and includes components (e.g., a control valve and a pump) for controlling a brake fluid pressure of the wheel cylinder. The braking force generated at a wheel is controlled by controlling the operation of the components of the hydraulic pressure control unit. For example, the braking apparatus 20 may electrically control a braking force generated at a wheel by an electric motor without using a brake hydraulic pressure. The braking apparatus 20 is defined to include, for example, a braking operation unit operated by the rider 2 and a braking unit that generates a braking force at a wheel.

The vehicle behavior sensor 30 detects traveling state information which is information relating to the traveling state of the leaning vehicle 1. The vehicle behavior sensor 30 is, for example, a vehicle speed sensor, a rotation speed sensor, a throttle position sensor, or an inertial sensor (IMU). The vehicle speed sensor detects a speed generated in the leaning vehicle 1, that is, a vehicle speed. The vehicle speed sensor may detect another physical quantity that can be substantially converted into a vehicle speed of the leaning vehicle 1. For example, the vehicle speed of the leaning vehicle 1 may be acquired by detecting a wheel speed of the front wheel and/or the rear wheel using a front wheel speed sensor and/or a rear wheel speed sensor. The rotation speed sensor detects a rotation speed of the engine of the leaning vehicle 1. The rotation speed sensor may detect another physical quantity that can be substantially converted into a rotation speed of the engine. The throttle position sensor detects information relating to the position of the throttle (for example, a throttle opening degree). The throttle position sensor may detect another physical quantity that can be substantially converted into a position of the throttle. The inertial sensor detects accelerations in three axes (a longitudinal direction, a vehicle width direction, and a vehicle height direction) and angular velocities in three axes (roll, pitch, and yaw) generated in the leaning vehicle 1. The inertial sensor may detect other physical quantities that can be substantially converted into accelerations in the three axes and angular velocities in the three axes generated in the leaning vehicle 1. Further, the inertial sensor may detect only a part of the accelerations in the three axes and the angular velocities in the three axes.

The surrounding environment sensor 40 detects surrounding environment information relating to the environment surrounding the leaning vehicle 1. The surrounding environment sensor 40 preferably detects the surrounding environment information in a non-contact manner. The surrounding environment sensor 40 is mounted to the leaning vehicle 1. The surrounding environment sensor 40 detects, as the surrounding environment information, environment information in front of the leaning vehicle 1, behind the leaning vehicle 1, or on the sides of the leaning vehicle 1. Alternatively, the surrounding environment sensor 40 may detect, as the surrounding environment information, for example, at least two of the environment information in front of the leaning vehicle 1, the environment information behind the leaning vehicle 1, and the environment information on the sides of the leaning vehicle 1. The leaning vehicle 1 is not limited to being equipped with one surrounding environment sensor, and may be equipped with a plurality of surrounding environment sensors 40. For example, the surrounding environment sensor 40 may be at least two of a front surrounding environment sensor provided to a front portion of the body of the leaning vehicle 1, a rear surrounding environment sensor provided to a rear portion of the body of the leaning vehicle 1, and a side surrounding environment sensor provided to the body of the leaning vehicle 1 so as to face laterally.

For example, a camera that images the surroundings of the leaning vehicle 1 or a radar that can detect a distance from the leaning vehicle 1 to a target is used as the surrounding environment sensor 40. For example, in the surrounding environment sensor 40, the radar may be replaced with a laser imaging detection and ranging (LIDAR) or an ultrasonic sensor. For example, the surrounding environment sensor 40 may be a stereo camera. Where appropriate, one of a camera, a stereo camera, a radar, a LIDAR, and an ultrasonic sensor may be selected and used as the surrounding environment sensor 40, or two or more of a camera, a stereo camera, a radar, a LIDAR, and an ultrasonic sensor may be used in combination.

For example, the surrounding environment information is information on a relative position, a relative distance, a relative speed, a relative acceleration, a relative jerk, and a passing time difference between the leaning vehicle 1 and the target. For example, the surrounding environment information is information such as a predicted time until the leaning vehicle 1 collides with the target. For example, the surrounding environment information is information relating to an azimuth in which the target is located, and/or a direction in which the target is located with reference to the leaning vehicle 1. For example, the surrounding environment information is information relating to a feature of the target. The feature of the target is, for example, a type, a shape, a size, a mark attached to the target, or the like. The target located within a detection range is, for example, a vehicle, an obstacle, road equipment, a person, an animal, a lane boundary line drawn on a road surface, or the like.

For example, the surrounding environment information may be acquired from a vehicle other than the leaning vehicle 1 or an external apparatus such as an infrastructure. For example, the controller 80 can acquire the surrounding environment information from a vehicle other than the leaning vehicle 1, an infrastructure, or the like through wireless communication. It should be noted that the traveling state information such as the vehicle speed of the leaning vehicle 1 may be acquired as the surrounding environment information from a vehicle other than the leaning vehicle 1, an infrastructure, or the like.

The input apparatus 50 receives various operations by the rider 2. For example, the rider 2 can switch between enabling and disabling various rider assistance operations using the input apparatus 50. For example, the rider 2 can set various operation modes or various threshold values (e.g., an upper limit value and a lower limit value) used in various rider assistance operations by using the input apparatus 50. For example, the rider 2 can control the operation of various devices provided to the leaning vehicle 1 and/or various devices belonging to the leaning vehicle 1 by using the input apparatus 50. The input apparatus 50 includes, for example, a push button provided to a handlebar and used for an operation by the rider 2. Alternatively, the input apparatus 50 may be included in a display apparatus. In that case, for example, the rider 2 performs various operations using the display apparatus in accordance with information displayed on the display apparatus. Information relating to the operation of the rider 2 using the input apparatus 50 is output to the controller 80. The input apparatus 50 may receive an operation by the body (e.g., a hand and a foot) of the rider 2, or may receive a voice emitted from the rider 2. The input apparatus 50 may be provided to the leaning vehicle 1, or may be provided to equipment attached to the leaning vehicle 1. The equipment attached to the leaning vehicle 1 is, in other words, a wearing article 3 of the rider 2. The wearing article 3 of the rider 2 is, for example, a helmet, gloves, and a jacket.

The notification apparatus 60 notifies the rider 2 of the leaning vehicle 1 or a target other than the rider 2 of various information. For example, the notification apparatus 60 makes a notification of various information by display. For example, the notification apparatus 60 makes a notification of various information by sound. For example, the notification apparatus 60 makes a notification of various information by vibration. Display is a perception using a visual organ as a sensory organ. Sound is a perception using an auditory organ as a sensory organ. Vibration is a perception using a tactile organ as a sensory organ. For example, the notification apparatus 60 is a display apparatus, a lamp, a speaker, a vibrator, or the like. The notification apparatus 60 may be provided to the leaning vehicle 1 or may be provided to the wearing article 3 of the rider 2. The notification apparatus 60 may make a notification of a warning or information by causing instantaneous deceleration or acceleration of the leaning vehicle 1. That is, the notification apparatus 60 may include the driving apparatus 10 or the braking apparatus 20. Further, the notification apparatus 60 may include the input apparatus 50.

The safety apparatus 70 is, for example, a support apparatus 71, a protective apparatus 72 and/or a protective apparatus 73. The safety apparatus 70 is used in a safing operation to be described below.

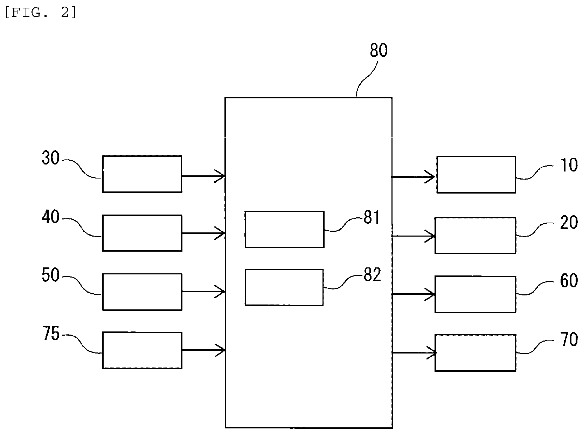

The controller 80 according to an embodiment of the invention will be described with reference to Fig. 2. Fig. 2 is a block diagram illustrating an example of a functional configuration of the controller.

The controller 80 includes at least an execution unit 81. All or each part of the controller 80 may be collectively provided in one housing, or may be separately provided in a plurality of housings. In addition, for example, a part or whole of the controller may be configured by a microcomputer, a microprocessor unit, or the like, or may be configured by an updatable element such as firmware, or may be a program module or the like that is executed in accordance with a command from a CPU or the like. The controller 80 can execute various operation modes used in various rider assistance operations by controlling the operations of the driving apparatus 10, the braking apparatus 20, the notification apparatus 60, the safety apparatus 70, and the like based on various signals output from the vehicle behavior sensor 30, the surrounding environment sensor 40, the input apparatus 50, a state detection unit 75, and the like. The controller 80 may acquire the various signals using an acquisition unit 82 of the controller 80. In addition, the controller 80 can use the execution unit 81 to execute various processing for executing various operation modes and/or various determination processing.

The controller 80 can execute, as one operation mode of the rider assistance operations, a safing operation mode in which a safing operation can be executed. The safing operation is an operation of executing at least one of a fall-prevention operation and an impact reduction operation. For example, the safing operation is an operation of supporting the leaning vehicle 1 as the fall-prevention operation. In the fall-prevention operation, the controller 80 operates the support apparatus 71 as the safety apparatus 70 to support the leaning vehicle 1, thereby preventing the leaning vehicle 1 from falling over. For example, the safing operation is an operation of activating the safety apparatus 70 provided to the leaning vehicle 1 and/or the wearing article 3 of the rider 2 as the impact reduction operation. In the impact reduction operation, the controller 80 operates the protective apparatus 72 and/or the protective apparatus 73 as the safety apparatus 70 to reduce the impact applied to the leaning vehicle 1 and/or the rider 2 of the leaning vehicle 1 due to falling over of the leaning vehicle 1.

The support apparatus 71 is at least one apparatus that can support the leaning vehicle 1.

For example, the support apparatus 71 is a side stand provided to the leaning vehicle 1 so as to be switchable between a inoperable state and an operating state. In the inoperable state, the side stand is held at a inoperable position at which the side stand does not hinder the traveling of the leaning vehicle 1. In the operating state, the side stand is held at an operating position at which the side stand is interposed between the ground and the leaning vehicle 1 to support the leaning vehicle 1. For example, the lower end of the side stand in the operating position is not in contact with the ground in a state in which the leaning vehicle 1 is standing upright, and becomes in contact with the ground in a state in which the leaning vehicle 1 is leaning. That is, the operating position of the side stand may be any position as long as the side stand can support the leaning vehicle 1 to prevent the leaning vehicle 1 from falling over when the leaning vehicle 1 is about to fall over. The support apparatus 71 may be any of various stands such as a center stand.

The support apparatus 71 may be an auxiliary wheel provided to the leaning vehicle 1. The leaning vehicle 1 can travel in a state in which the auxiliary wheel is in contact with the ground. However, in the case where the leaning vehicle 1 travels at a high speed or turns a curve, the auxiliary wheel may hinder the traveling of the leaning vehicle 1 when being in contact with the ground. Thus, as in the case of the side stand, preferably, the auxiliary wheel is also provided so as to be switchable between a inoperable state and an operating state, and in the inoperable state, the auxiliary wheel is held at a inoperable position at which the auxiliary wheel does not hinder the traveling of the leaning vehicle 1.

The support apparatus 71 is switched between an operating state and a inoperable state in an electric manner, in a fluidic manner using a hydraulic pressure, pneumatic pressure, or the like, and/or in a chemical manner based on an electrical signal from the controller 80.

The protective apparatus 72 is at least one apparatus that can reduce an impact applied to the leaning vehicle 1. The protective apparatus 73 is at least one apparatus that can reduce an impact applied to the rider 2. As the safety apparatus 70, the protective apparatus 72 and the protective apparatus 73 may be provided, or either one of the protective apparatus 72 and the protective apparatus 73 may be provided.

For example, the protective apparatus 72 is a skid, a slider, or the like provided to the leaning vehicle 1 so as to be switchable between a inoperable state and an operating state. The skid has, for example, a plate-like shape, is folded or stored in a storage space in the inoperable state, and covers a device such as the engine in the operating state to reduce an impact applied to the device such as the engine due to falling over. The slider has, for example, a projected shape, and is folded, contracted, or stored in a storage space in the non-operation state, and projects from the body of the leaning vehicle 1 when activated so as to reduce an impact applied to the body of the leaning vehicle 1 due to falling over. Alternatively, for example, the protective apparatus 72 may be an additionally provided tire. The tire is stored in a storage space or held at a inoperable position at which the tire does not come into contact with the ground surface in a inoperable state, and is interposed between the leaning vehicle 1 and the ground when activated so as to reduce an impact applied to the body of the leaning vehicle 1 due to falling over.

For example, the protective apparatus 73 may be a shock absorber provided to the wearing article 3 of the rider 2. The shock absorber is folded, contracted, or stored in a storage space in a inoperable state, and projects from the wearing article 3 when activated so as to reduce an impact applied to the rider 2 due to falling over.

For example, the protective apparatus 72 and/or the protective apparatus 73 may be an air-bag.

As described below, the controller 80 prohibits the safing operation at the first time point in the first period which is a period from when the leaning vehicle 1 starts deceleration to a time point at which the leaning vehicle 1 is brought into the stopped state or the slow-drive state by the deceleration. According to an embodiment of the present invention, in the case where the leaning vehicle 1 or the rider 2 is expected to fall over or collide with an impact, the controller 80 may prohibit the safing operation by prohibiting a function of the protective apparatus 72 and/or the protective apparatus 73 to get into the operating state before the impact is detected while always permitting a function of the protective apparatus 72 and/or the protective apparatus 73 to get into the operating state after the impact is detected. That is, in the case where the safety apparatus 70 is the protective apparatus 72 and/or the protective apparatus 73, the "safing operation" of the present invention is defined as the protective apparatus 72 and/or the protective apparatus 73 getting into the operating state before the impact is detected.

The protective apparatus 72 and/or the protective apparatus 73 are/is switched between the operating state and the inoperable state in an electric manner, in a fluidic manner using a hydraulic pressure, pneumatic pressure, or the like, and/or in a chemical manner based on an electrical signal from the controller 80. In addition, the protective apparatus 72 and/or the protective apparatus 73 may be configured not to return to the inoperable state after being brought into the operating state.

As described above, various devices can be mounted as the safety apparatus 70. In the safing operation, the controller 80 may bring all of the various devices into the operating state, or may bring at least one of the various devices into the operating state. In addition, the various devices may be different from each other in an operation method of switching between the operating state and the inoperable state, and may be different from each other in a time required for switching from the inoperable state to the operating state. Thus, the controller 80 may individually control the timing of switching to the operating state such that each of the various devices gets into the operating state before falling over occurs. Alternatively, when it is determined that falling over cannot be avoided and there is no time before the falling over, the controller 80 may select and operate a device for which the time required for switching from the inoperable state to the operating state is short from among the various devices.

For example, the safety apparatus 70 is preferably a device that can be used repeatedly by switching from the operating state to the inoperable state. For example, in a situation in which the leaning vehicle 1 repeats stopping and starting, the leaning vehicle 1 is supported by the support apparatus 71 when the leaning vehicle 1 is stopped, and the support apparatus 71 is returned to the inoperable state when the leaning vehicle 1 is started. Using the support apparatus 71 as the safety apparatus 70 is useful in that the rider 2 does not need to support the leaning vehicle 1 by himself/herself. In addition, automatically supporting and stopping the leaning vehicle 1 by the support apparatus 71 is also useful in the case where the rider 2 is small in body size with respect to the leaning vehicle 1 and it is difficult for the rider 2 to support the leaning vehicle 1 by himself/herself. For example, when the protective apparatus 72, 73 is brought into the operating state because there is a possibility that the leaning vehicle 1 will fall over, and subsequently the possibility that the leaning vehicle 1 will fall over is dispelled, the protective apparatus 72, 73 can be switched from the operating state to the inoperable state so as to restart the traveling of the leaning vehicle 1. For example, when the leaning vehicle 1 restarts traveling after falling over, the protective apparatus 72, 73 can be switched from the operating state to the inoperable state so as to restart the traveling of the leaning vehicle 1.

In the case where the safety apparatus 70 is a device that is not repeatedly used by switching from the operating state to the inoperable state, the controller 80 may set a start timing for starting the switching from the inoperable state to the operating state to be late. As a result, it is possible to prevent the safety apparatus 70 from being operated in a situation in which falling over can be avoided.

Whether the safety apparatus 70 is in the operating state or the inoperable state can be detected by using the state detection unit 75. For example, the state detection unit 75 is a detection device such as a sensor provided to the leaning vehicle 1, the support apparatus 71, and/or the protective apparatus 72. For example, the state detection unit 75 is a detection device such as a sensor provided to the wearing article 3 of the rider 2 and/or the protective apparatus 73. For example, by using an inertial sensor as the state detection unit 75, the state detection unit 75 can determine a vehicle falling direction and/or a rider falling direction to be described below.

The controller 80 can execute, as one operation mode of the rider assistance operations, a positional relationship adjustment mode in which a positional relationship adjustment operation can be executed. The positional relationship adjustment operation is, for example, an operation of adjusting the positional relationship between the leaning vehicle 1 and a target by causing the leaning vehicle 1 to automatically decelerate or accelerate without operation of the driving operation unit of the driving apparatus 10 and/or the braking operation unit of the braking apparatus 20 by the rider 2. The target is, for example, another vehicle, another leaning vehicle, a stop line indicated on a road surface of a road, a pedestrian, or the like. During the execution of the positional relationship adjustment mode, the controller 80 may perform the positional relationship adjustment operation when the target is determined, and need not perform the positional relationship adjustment operation when the target is not determined. When the target is not determined during the execution of the positional relationship adjustment mode, the controller 80 may execute an operation of controlling the speed of the leaning vehicle 1 regardless of the positional relationship between the leaning vehicle 1 and the target. The operation of controlling the speed of the leaning vehicle 1 regardless of the positional relationship between the leaning vehicle 1 and the target may be a cruise control operation of maintaining the speed of the leaning vehicle 1 at a set speed. Alternatively, the operation of controlling the speed of the leaning vehicle 1 regardless of the positional relationship between the leaning vehicle 1 and the target may be an automatic deceleration operation of decelerating the leaning vehicle 1 at a predetermined deceleration or may be an automatic acceleration operation of accelerating the leaning vehicle 1 at a predetermined acceleration. Even when the target is determined during the execution of the positional relationship adjustment mode, the controller 80 may interrupt the positional relationship adjustment operation being executed based on a manual operation by the rider 2 or the like.

The positional relationship adjustment operation may be an adaptive cruise control operation in which a target vehicle is a subject of speed follow-up. The positional relationship adjustment operation may be an operation of causing the braking apparatus 20 to control an inter-vehicle distance or a passing time difference with respect to a target vehicle to a distance or a time difference in accordance with the operation amount of the driving operation unit in a state in which the rider 2 operates the driving operation unit of the driving apparatus 10. The positional relationship adjustment operation may be an operation of causing the driving apparatus 10 to control an inter-vehicle distance or a passing time difference with respect to a target vehicle to a distance or a time difference in accordance with the operation amount of the braking operation unit in a state in which the rider 2 operates the braking operation unit of the braking apparatus 20.

The positional relationship adjustment operation may be an operation of adjusting the positional relationship between the leaning vehicle 1 and a target by automatically increasing or decreasing a braking force generated at a wheel of the leaning vehicle 1 so as to correct the excess or deficiency of the operation of the braking operation unit of the braking apparatus 20 by the rider 2. The positional relationship adjustment operation may be an operation of adjusting the positional relationship between the leaning vehicle 1 and a target by automatically increasing or decreasing a driving force generated in the leaning vehicle 1 so as to correct the excess or deficiency of the operation of the driving operation unit of the driving apparatus 10 by the rider 2.

During the execution of the positional relationship adjustment mode, the controller 80 can execute at least one of a deceleration operation of decelerating the leaning vehicle 1, a stopping operation of stopping the leaning vehicle 1 by the decelerating, a slow-drive operation of bringing the leaning vehicle 1 into a slow-drive state by the decelerating, an acceleration operation of accelerating the leaning vehicle 1 which is decelerating or slow-driving, and a starting operation of starting the leaning vehicle 1 which has been stopped. Then, the controller 80 can execute at least one of the deceleration operation, the stopping operation, the slow-drive operation, the acceleration operation, and the starting operation while adjusting the positional relationship between the leaning vehicle 1 and the target by the positional relationship adjustment operation in a state in which the positional relationship adjustment operation is executed during the execution of the positional relationship adjustment mode. The target is a target vehicle which is a subject of speed follow-up, a traffic signal, a traffic sign, a stop line indicated on a road surface, or the like. The controller 80 may execute at least one of the deceleration operation, the stopping operation, the slow-drive operation, the acceleration operation, and the starting operation regardless of the positional relationship between the leaning vehicle 1 and the target in a state in which the positional relationship adjustment operation is not executed during the execution of the positional relationship adjustment mode. A manual operation by the rider 2 may appropriately intervene in the deceleration operation, the stopping operation, the slow-drive operation, the acceleration operation, and/or the starting operation. During the execution of the positional relationship adjustment mode, the controller 80 may execute a notification operation of notifying the rider 2 of the start of the deceleration operation, the stopping operation, the slow-drive operation, the acceleration operation, and/or the starting operation.

For example, the controller 80 may bring the leaning vehicle 1 into the stopped state or the slow-drive state while adjusting the positional relationship between the leaning vehicle 1 and the target in a state in which the positional relationship adjustment operation is executed during the execution of the positional relationship adjustment mode. For example, the controller 80 may decelerate the leaning vehicle 1 in accordance with the deceleration of the target vehicle by the positional relationship adjustment operation, and when the target vehicle is stopped, the controller 80 may bring the leaning vehicle 1 into the stopped state by the stopping operation at a position behind the target vehicle which is separated from the target vehicle by a predetermined distance. For example, when a stop line is detected, the controller 80 may stop the leaning vehicle 1 at a position behind the stop line which is separated from the stop line by a predetermined distance.

For example, during the execution of the positional relationship adjustment mode, the controller 80 may decrease the speed of the leaning vehicle 1 to a low speed in a state in which the positional relationship adjustment operation is executed, and then may interrupt the positional relationship adjustment operation. In the case where, during the execution of the positional relationship adjustment mode, the controller 80 decreases the speed of the leaning vehicle 1 to a low speed in a state in which the positional relationship adjustment operation is executed, and then interrupts the positional relationship adjustment operation, the controller 80 may, after interrupting the positional relationship adjustment operation, bring the leaning vehicle 1 into the stopped state or the slow-drive state by decelerating the leaning vehicle 1 at a predetermined deceleration set in advance regardless of the positional relationship between the leaning vehicle 1 and the target, in a state in which the positional relationship adjustment operation is not executed. It should be noted that the predetermined deceleration in the slow-drive operation and the predetermined deceleration in the stopping operation may be the same or different.

For example, in the case where, during the execution of the positional relationship adjustment mode, the controller 80 decreases the speed of the leaning vehicle 1 to a low speed in a state in which the positional relationship adjustment operation is executed, and then interrupts the positional relationship adjustment operation, when a manual operation indicating an intent of stopping by the rider 2 is detected after the interruption of the positional relationship adjustment operation, the controller 80 may restart the positional relationship adjustment operation and bring the leaning vehicle 1 into the stopped state or the slow-drive state while adjusting the positional relationship between the leaning vehicle 1 and the target by the positional relationship adjustment operation.

For example, in the case where, during the execution of the positional relationship adjustment mode, the controller 80 decreases the speed of the leaning vehicle 1 to a low speed in a state in which the positional relationship adjustment operation is executed, and then interrupts the positional relationship adjustment operation, when a manual operation indicating an intent of stopping by the rider 2 is detected after the interruption of the positional relationship adjustment operation, the controller 80 may bring the leaning vehicle 1 into the stopped state or the slow-drive state by decelerating the leaning vehicle 1 at a predetermined deceleration set in advance regardless of the positional relationship between the leaning vehicle 1 and the target, in a state in which the positional relationship adjustment operation is not executed.

For example, the controller 80 may start the leaning vehicle 1, which has been stopped, by the starting operation while adjusting the positional relationship between the leaning vehicle 1 and the target in a state in which the positional relationship adjustment operation is executed during the execution of the positional relationship adjustment mode. For example, the controller 80 may accelerate the leaning vehicle 1, which is decelerating or slow-driving, by the acceleration operation while adjusting the positional relationship between the leaning vehicle 1 and the target in a state in which the positional relationship adjustment operation is executed during the execution of the positional relationship adjustment mode.

For example, the controller 80 may accelerate or start the leaning vehicle 1 regardless of the positional relationship between the leaning vehicle 1 and the target in a state in which the positional relationship adjustment operation is not executed during the execution of the positional relationship adjustment mode. For example, the controller 80 may accelerate the leaning vehicle 1 at a predetermined acceleration set in advance by the acceleration operation in a state in which the positional relationship adjustment operation is not executed during the execution of the positional relationship adjustment mode. For example, the controller 80 may start the leaning vehicle 1 by the starting operation and accelerate the leaning vehicle 1 at a predetermined acceleration set in advance by the acceleration operation regardless of the positional relationship between the leaning vehicle 1 and the target in a state in which the positional relationship adjustment operation is not executed during the execution of the positional relationship adjustment mode.

For example, in the case where a manual operation indicating an intent of accelerating or starting by the rider 2 is detected in a state in which the positional relationship adjustment operation is not executed during the execution of the positional relationship adjustment mode, the controller 80 may start the positional relationship adjustment operation, and may accelerate the leaning vehicle 1 by the acceleration operation or start the leaning vehicle 1 by the starting operation while adjusting the positional relationship between the leaning vehicle 1 and the target.

For example, in the case where a manual operation indicating an intent of accelerating or starting by the rider 2 is detected in a state in which the positional relationship adjustment operation is not executed during the execution of the positional relationship adjustment mode, the controller 80 may accelerate or start the leaning vehicle 1 regardless of the positional relationship between the leaning vehicle 1 and the target in a state in which the positional relationship adjustment operation is not executed. For example, in the case where a manual operation indicating an intent of accelerating or starting by the rider 2 is detected in a state in which the positional relationship adjustment operation is not executed during the execution of the positional relationship adjustment mode, the controller 80 may accelerate the leaning vehicle 1 at a predetermined acceleration set in advance in a state in which the positional relationship adjustment operation is not executed. For example, in the case where a manual operation indicating an intent of accelerating or starting by the rider 2 is detected in a state in which the positional relationship adjustment operation is not executed during the execution of the positional relationship adjustment mode, the controller 80 may start the leaning vehicle 1 by the starting operation and accelerate the leaning vehicle 1 at a predetermined acceleration set in advance by the acceleration operation regardless of the positional relationship between the leaning vehicle 1 and the target in a state in which the positional relationship adjustment operation is not executed.

The invention can be applied in any of the above-described states of the leaning vehicle 1. Further, the deceleration operation, the stopping operation, the slow-drive operation, the acceleration operation, and/or the starting operation need not be executed by the controller 80. That is, the deceleration operation, the stopping operation, the slow-drive operation, the starting operation, and/or the acceleration operation may be manual operations by a rider, for example, in a leaning vehicle in which the positional relationship adjustment mode cannot be executed, a leaning vehicle not provided with a hydraulic pressure control unit, or the like.

In a situation in which the leaning vehicle 1 travels at a low speed, it becomes difficult for the rider 2 to balance when a braking force and/or a driving force are/is automatically controlled by the positional relationship adjustment operation. Thus, the controller 80 executes the safing operation mode during the execution of the positional relationship adjustment mode. When it is detected that the positional relation adjustment mode has been continuously executed for a predetermined period of time, the controller 80 may execute the safing operation mode regardless of whether the positional relationship adjustment mode is being executed.

Even in a situation in which the leaning vehicle 1 is decelerating, when the leaning vehicle 1 is traveling at a speed higher than a low speed and the attitude of the leaning vehicle 1 is stable, the traveling of the leaning vehicle 1 may be hindered by the execution of the safing operation. Thus, the controller 80 prohibits the safing operation at the first time point in the first period which is a period from when the leaning vehicle 1 starts deceleration to a time point at which the leaning vehicle 1 is brought into the stopped state or the slow-drive state by the deceleration. The first time point is a time point at which the leaning vehicle 1 is traveling at a speed higher than a low speed, that is, a time point before a low-speed traveling start time point at which the leaning vehicle 1 starts traveling at the low speed.

The controller 80 executes prohibition determination for determining whether to prohibit the safing operation based on at least one of the traveling state information which is information relating to the traveling state of the leaning vehicle 1, the surrounding environment information which is information relating to the environment surrounding the leaning vehicle 1, and the manual operation information which is information relating to an operation executed by the rider 2. When it is determined in the prohibition determination that the safing operation is prohibited, the controller 80 prohibits the safing operation at the first time point. The controller 80 may combine two or more of various determination conditions described below in the prohibition determination.

For example, the traveling state information is information relating to the speed of the leaning vehicle 1. The controller 80 prohibits the safing operation when the speed of the leaning vehicle 1 is higher than a low-speed threshold value at the first time point. The controller 80 may prohibit the safing operation when the speed of the leaning vehicle 1 is equal to the low-speed threshold value at the first time point. The controller 80 may calculate the speed from a wheel speed of the leaning vehicle 1, an engine rotation speed, and the like. Alternatively, the controller 80 may prohibit the safing operation when a physical quantity that can be substantially converted into a speed of the leaning vehicle 1 is larger than a low-speed threshold value at the first time point. The controller 80 may prohibit the safing operation when a physical quantity that can be substantially converted into a speed of the leaning vehicle 1 is equal to the low-speed threshold value at the first time point. For example, the low-speed threshold value for the physical quantity is individually set as a threshold value corresponding to the low-speed threshold value for the speed of the leaning vehicle 1.

For example, the surrounding environment information is information relating to the speed of a target vehicle that is a subject of speed follow-up. The controller 80 prohibits the safing operation when the speed of the target vehicle is higher than the low-speed threshold value at the first time point. The controller 80 may prohibit the safing operation when the speed of the target vehicle is equal to the low-speed threshold value at the first time point.

For example, the manual operation information is information relating to a throttle opening degree adjusted by the rider 2. The controller 80 prohibits the safing operation when the throttle opening degree is larger than a low-speed threshold value at the first time point. The controller 80 may prohibit the safing operation when the throttle opening degree is equal to the low-speed threshold value at the first time point. For example, the low-speed threshold value for the throttle opening degree is set as a threshold value corresponding to the low-speed threshold value for the speed of the leaning vehicle 1.

The controller 80 permits the safing operation at a second time point after the first time point in the first period. The second time point is a time point after the low-speed traveling start time point.

The controller 80 executes permission determination for determining whether to permit the safing operation based on at least one of the traveling state information, the surrounding environment information, and the manual operation information. When it is determined in the permission determination that the safing operation is permitted, the controller 80 permits the safing operation at the second time point. The controller 80 may combine two or more of various determination conditions described below in the permission determination.

For example, the traveling state information is information relating to the speed of the leaning vehicle 1. The controller 80 permits the safing operation when the speed of the leaning vehicle 1 is lower than the low-speed threshold value. The controller 80 may permit the safing operation when the speed of the leaning vehicle 1 is equal to the low-speed threshold value at the second time point. Alternatively, the controller 80 may permit the safing operation when a physical quantity that can be substantially converted into a speed of the leaning vehicle 1 is smaller than a threshold value corresponding to the low-speed threshold value. The controller 80 may permit the safing operation when a physical quantity that can be substantially converted into a speed of the leaning vehicle 1 is equal to the threshold value corresponding to the low-speed threshold value. It should be noted that the second time point may be a time point before a stop time point at which the leaning vehicle 1 gets into the stopped state, or may be a time point after the stop time point. For example, in the case where the second time point is a time point after the stop time point, the controller 80 may permit the safing operation when the speed of the leaning vehicle 1 is equal to a stop threshold value. The stop threshold value is a speed threshold value corresponding to a vehicle speed at which the leaning vehicle 1 is stopped (i.e., 0 km/h).

For example, the surrounding environment information is information relating to the speed of a target vehicle that is a subject of speed follow-up. The controller 80 permits the safing operation when the speed of the target vehicle is lower than the low-speed threshold value. The controller 80 may permit the safing operation when the speed of the target vehicle is equal to the low-speed threshold value. The controller 80 may permit the safing operation when the speed of the target vehicle is equal to the stop threshold value.

For example, the manual operation information is information relating to a throttle opening degree adjusted by the rider 2. The controller 80 permits the safing operation when the throttle opening degree is smaller than the low-speed threshold value. The controller 80 may permit the safing operation when the throttle opening degree is equal to the low-speed threshold value. The controller 80 may permit the safing operation when the throttle opening degree is a throttle opening degree in a state in which the leaning vehicle 1 is stopped.

Even when the controller 80 permits the safing operation, there may be a case where the safing operation does not need to be executed. Thus, the controller 80 executes necessity determination for determining whether the safing operation needs to be executed after the second time point during the execution of the safing operation mode. The controller 80 executes the safing operation when it is determined that the safing operation needs to be executed in the necessity determination, and does not execute the safing operation when it is determined that the safing operation does not need to be executed in the necessity determination. In the case where the safing operation is not executed, the controller 80 may continuously permit the safing operation and repeat the necessity determination.

In the necessity determination, the controller 80 determines whether the safing operation needs to be executed based on at least one of the traveling state information, the surrounding environment information, and the manual operation information. The controller 80 may combine two or more of various determination conditions described below in the necessity determination.

For example, the traveling state information is information relating to the attitude of the leaning vehicle 1. In the necessity determination, the controller 80 execute fall possibility determination based on at least one of a roll angle, a roll rate, and a lateral acceleration of the leaning vehicle 1, and determines whether there is a possibility that the leaning vehicle 1 will fall over. Then, when it is determined that there is a possibility that the leaning vehicle 1 will fall over, the controller 80 determines that the safing operation needs to be executed, and executes at least one of the fall-prevention operation and the impact reduction operation as the safing operation. Specifically, the controller 80 determines that the safing operation needs to be executed when at least one of the roll angle, the roll rate, and/or the lateral acceleration is larger than a fall determination threshold value. The controller 80 may determine that the safing operation needs to be executed when at least one of the roll angle, the roll rate, and/or the lateral acceleration is equal to the fall determination threshold value. For example, the fall determination threshold value for the roll angle is set to a value corresponding to a roll angle at which the leaning vehicle 1 cannot be self-standing. The controller 80 may determine that the safing operation needs to be executed when the roll rate and/or the lateral acceleration are/is a value/values at which the leaning vehicle 1 is expected to fall over.

For example, the traveling state information is information relating to the speed of the leaning vehicle 1. In the necessity determination, the controller 80 determines that the safing operation needs to be executed when the speed of the leaning vehicle 1 is lower than a stop preparation threshold value. In the necessity determination, the controller 80 may determine that the safing operation needs to be executed when the vehicle speed is equal to the stop preparation threshold value. For example, the stop preparation threshold value is a speed threshold value corresponding to a vehicle speed at which the leaning vehicle 1 is ready at any time to stop (e.g., 10 km/h). Alternatively, the stop threshold value may be used instead of the stop preparation threshold value. For example, the controller 80 may determine whether the safing operation needs to be executed based on another physical quantity that can be substantially converted into a speed of the leaning vehicle 1, such as a wheel speed or an engine rotation speed, for example. For example, the stop preparation threshold value is set as a value corresponding to a vehicle speed at which the leaning vehicle 1 is ready at any time to stop with respect to a wheel speed and/or an engine rotation speed.

For example, the traveling state information is information relating to the driving apparatus 10 of the leaning vehicle 1. In the necessity determination, the controller 80 may determine that the safing operation needs to be executed when a detection apparatus such as a sensor detects that engine stall has occurred.

For example, the surrounding environment information is the speed of a target vehicle that is a subject of speed follow-up. In the necessity determination, the controller 80 determines that the safing operation needs to be executed when the speed of the target vehicle is lower than the stop preparation threshold value. In the necessity determination, the controller 80 may determine that the safing operation needs to be executed when the speed of the target vehicle is equal to the stop preparation threshold value. For example, the surrounding environment information is information relating to a traffic signal, a traffic sign, or the like. The controller 80 may determine that the safing operation needs to be executed when a traffic signal, a traffic sign, or the like indicating that the leaning vehicle 1 needs to be stopped or drive slowly is detected. For example, the surrounding environment information is information relating to a road surface condition. The controller 80 may determine that the safing operation needs to be executed based on, for example, an inclination of a road surface.

For example, the manual operation information is information relating to a throttle opening degree adjusted by the rider 2. In the necessity determination, the controller 80 determines that the safing operation needs to be executed when the throttle opening degree is smaller than the stop preparation threshold value. In the necessity determination, the controller 80 may determine that the safing operation needs to be executed when the throttle opening degree is equal to the stop preparation threshold value. In the necessity determination, the controller 80 may determine that the safing operation needs to be executed when the throttle opening degree is equal to the stop threshold value. For example, the controller 80 may determine that the safing operation needs to be executed when the throttle opening degree is a throttle opening degree in a state in which the leaning vehicle 1 travels at a vehicle speed at which the leaning vehicle 1 is ready at any time to stop (e.g., 10 km/h). For example, the controller 80 may determine that the safing operation needs to be executed when the throttle opening degree is a throttle opening degree in a state in which the leaning vehicle 1 is stopped. The manual operation information may be information relating to a rider assistance operation mode selected by the rider 2. For example, the controller 80 may determine that the safing operation needs to be executed when the rider 2 performs a manual operation indicating an intent of stopping.

Preferably, the controller 80 executes the fall-prevention operation when it is determined that the safing operation needs to be executed in the necessity determination, and executes the impact reduction operation when falling over of the leaning vehicle 1 cannot be prevented by the fall-prevention operation. However, the fall-prevention operation and the impact reduction operation may be simultaneously executed when it is determined that the safing operation needs to be executed in the necessity determination.

For example, the controller 80 can execute vehicle falling direction determination for determining a vehicle falling direction which is a direction in which the leaning vehicle 1 will fall over, and can cause the support apparatus 71 to operate in the vehicle falling direction.

The vehicle falling direction can be determined based on at least one of a roll angle, a roll rate, and a lateral acceleration of the leaning vehicle 1. For example, one of the right and left directions of the leaning vehicle 1 is set as a positive direction, and the other is set as a negative direction. Then, the controller 80 brings the support apparatus 71 into the operating state in the positive direction when at least one of the roll angle, the roll rate, and the lateral acceleration is a positive value, and brings the support apparatus 71 into the operating state in the negative direction when at least one of the roll angle, the roll rate, and the lateral acceleration is a negative value.

When the support apparatus 71 cannot prevent the leaning vehicle 1 from falling over, the controller 80 executes the impact reduction operation. For example, the controller 80 executes impact reduction necessity determination for determining whether the impact reduction operation needs to be executed. The controller 80 may combine two or more of various determination conditions described below in the impact reduction necessity determination.

For example, the controller 80 executes the vehicle falling direction determination and a support direction determination in the impact reduction necessity determination. For example, in the support direction determination, the controller 80 uses a detection apparatus such as a sensor to determine a support direction, that is, in which of the right and left directions of the leaning vehicle 1 the support apparatus 71 is in the operating state. The controller 80 can determine that there is a possibility that the leaning vehicle 1 will fall over when the vehicle falling direction and the support direction are opposite to each other. Then, the controller 80 brings the protective apparatus 72 and/or the protective apparatus 73 into the operating state in the vehicle falling direction.

For example, when at least one of the roll angle, the roll rate, and the lateral acceleration becomes a value at which falling over of the leaning vehicle 1 cannot be avoided in a state in which the support apparatus 71 operates, the controller 80 determines that there is a possibility that the leaning vehicle 1 will fall over in the direction in which the support apparatus 71 operates. Then, the controller 80 executes the impact reduction operation, and brings the protective apparatus 72 and/or the protective apparatus 73 into the operating state in the direction in which the support apparatus 71 is located.

For example, in the impact reduction necessity determination, the controller 80 executes rider falling direction determination for determining a rider falling direction in which the rider 2 will fall over. In the impact reduction operation, the controller 80 causes the protective apparatus 73 to operate in the rider falling direction with respect to the rider 2. For example, the controller 80 can determine the rider falling direction based on at least one of the roll angle, the roll rate, and the lateral acceleration generated at the wearing article 3 of the rider 2, which are detected by the state detection unit 75 provided to the wearing article 3 of the rider 2.

The controller 80 determines that the impact reduction operation does not need to be executed when none of the various determination conditions is satisfied in the impact reduction necessity determination. Alternatively, the controller 80 may determine that the impact reduction operation does not need to be executed when at least one of the various determination conditions is not satisfied in the impact reduction necessity determination.

According to an embodiment of the invention, the controller 80 executes the impact reduction operation based on the operating state of the fall-prevention operation. However, the controller 80 may execute the impact reduction operation in a state in which the fall-prevention operation is not executed when there is a possibility that the leaning vehicle 1 will fall over. For example, when there is a possibility that the leaning vehicle 1 will fall over, the controller 80 may execute the impact reduction operation in a situation in which an operation of supporting the leaning vehicle 1 by the support apparatus 71 as the fall-prevention operation is not executed.

Here, when the leaning vehicle 1 accelerates or starts under a situation in which the safing operation is executed, the acceleration or the start of the leaning vehicle 1 may be hindered by the safing operation. Thus, during the execution of the safing operation, the controller 80 executes cancellation determination for determining whether the safing operation being executed needs to be canceled, and cancels the safing operation when it is determined in the cancellation determination that the safing operation needs to be canceled. Specifically, the controller 80 returns the safety apparatus 70 from the operating state to the inoperable state. From the viewpoint of canceling the safing operation before the acceleration or the start of the leaning vehicle 1 so as to prepare for the acceleration or the start of the leaning vehicle 1, the controller 80 may execute the cancellation determination and cancel the safing operation at a time point before a third time point at which the leaning vehicle 1 starts to accelerate or travel in the first period. However, the controller 80 may execute the cancellation determination in a second period which is a period after the third time point. Further, the controller 80 may cancel the safing operation in the second period.

In the cancellation determination, the controller 80 determines whether the safing operation needs to be canceled based on at least one of the traveling state information, the surrounding environment information, and the manual operation information. The controller 80 may combine two or more of various determination conditions described below in the cancellation determination.

For example, the traveling state information is information relating to at least one of the speed, a wheel speed, and an engine rotation speed of the leaning vehicle 1. The controller 80 determine that the safing operation needs to be canceled when at least one of the speed, the wheel speed, and the engine rotation speed of the leaning vehicle 1 increases. Alternatively, the controller 80 may determine that the safing operation needs to be canceled when at least one of the speed, the wheel speed, and the engine rotation speed of the leaning vehicle 1 changes from zero to a value at which the leaning vehicle 1 can travel.

For example, the traveling state information is information relating to the attitude of the leaning vehicle 1. For example, in the case where the leaning vehicle 1 is stopped and supported by the support apparatus 71 on one side in the right and left direction, a supported roll angle which is a roll angle when the leaning vehicle 1 is supported is larger than a roll angle when the leaning vehicle 1 starts. Such a change in the attitude can be detected by the vehicle behavior sensor 30. Thus, the controller 80 may determine that the safing operation needs to be canceled when the roll angle of the leaning vehicle 1 becomes smaller than the supported roll angle. Alternatively, the controller 80 may determine that the safing operation needs to be canceled when a roll rate or a lateral acceleration toward a direction opposite to the direction in which the support apparatus 71 operates is generated.

For example, the traveling state information is information relating to the state of the safety apparatus 70. The controller 80 may determine that the safing operation needs to be canceled when it is detected that the support apparatus 71 is switched from the operating state to the inoperable state.

For example, the surrounding environment information is information relating to the positional relationship between the leaning vehicle 1 and a target vehicle that is a subject of speed follow-up. In the case where the leaning vehicle 1 is caused to follow the speed of the target vehicle by the positional relationship adjustment operation, the target vehicle starts to accelerate before the leaning vehicle 1, and the leaning vehicle 1 also starts to accelerate as the target vehicle starts to accelerate. As a result, when the target vehicle starts to accelerate, a passing time difference between the leaning vehicle 1 and the target vehicle, an inter-vehicle distance, and/or a relative speed of the target vehicle with respect to the leaning vehicle 1 tend/tends to increase. Thus, the controller 80 may determine that the safing operation needs to be canceled when at least one of the passing time difference, the inter-vehicle distance, and the relative speed tends to increase. Similarly, when the target vehicle which has been stopped starts, a passing time difference, an inter-vehicle distance, and/or a relative speed of the target vehicle with respect to the leaning vehicle 1 are/is generated between the leaning vehicle 1 and the target vehicle. Thus, the controller 80 may determine that the safing operation needs to be canceled when at least one of the passing time difference, the inter-vehicle distance, and the relative speed changes from zero to a positive value.

For example, the surrounding environment information is information relating to a traffic signal. The controller 80 may determine that the safing operation needs to be canceled when a traffic signal indicating that the leaning vehicle 1 needs to accelerate or start is detected.

For example, the manual operation information is information relating to a manual operation indicating an intent of accelerating and/or starting by the rider 2. For example, the controller 80 may determine that the safing operation needs to be canceled when the throttle opening degree increases. The controller 80 may determine that the safing operation needs to be canceled when the throttle opening degree changes from zero to a value at which the leaning vehicle 1 can travel. For example, the controller 80 may determine that the safing operation needs to be canceled when the support apparatus 71 is switched from the operating state to the inoperable state by the rider 2.

It should be noted that, according to an embodiment of the invention, the controller 80 gradually decelerates the leaning vehicle 1 to the stopped state or the slow-drive state so as not to impair the comfort of the rider 2 during the execution of the positional relationship adjustment mode. However, the controller 80 may execute a collision prevention operation of preventing collision between the leaning vehicle 1 and a target, for example, when a collision possibility which is a possibility of the collision between the leaning vehicle 1 and the target exceeds a reference during the execution of the positional relationship adjustment mode. In that case, the controller 80 executes at least the impact reduction operation as the safing operation. By executing collision possibility determination, the controller 80 can determine whether there is a collision possibility and/or whether the collision possibility exceeds a reference.

The collision prevention operation may be a notification operation of notifying the rider 2 that the collision possibility exceeds the reference. The collision prevention operation may be an operation of applying emergency brake to avoid the collision. The controller 80 may start the impact reduction operation during the execution of the collision prevention operation, or may start the impact reduction operation after the collision prevention operation ends. The controller 80 may start the impact reduction operation when the collision prevention operation has been continuously executed for a predetermined time period.

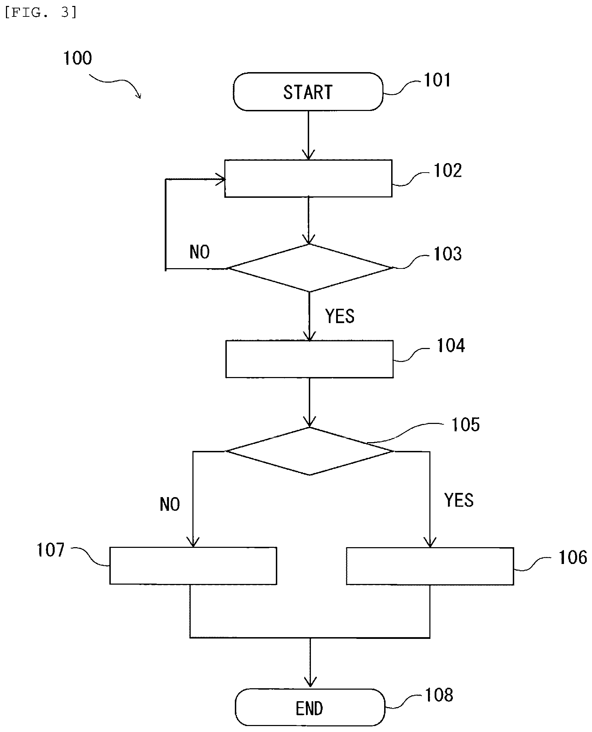

A control process by the controller 80 will be described below with reference to Fig. 3. Fig. 3 is a flowchart illustrating a control process 100 by the controller 80. The control process 100 is executed in the first period which is a period from when the leaning vehicle 1 starts deceleration to a time point at which the leaning vehicle 1 is brought into the stopped state or the slow-drive state by the deceleration.

In step 101, the control process 100 is started.

In step 102, the controller 80 prohibits the safing operation. This prohibition is to prohibit the safing operation at the first time point in the first period.

In step 103, the controller 80 execute low-speed traveling determination for determining whether the leaning vehicle 1 is traveling at a low speed.

When it is determined in step 103 that the leaning vehicle 1 is not traveling at a low speed (103: NO), the control process 100 returns to step 102, and the prohibition of the safing operation is maintained.

When it is determined in step 103 that the leaning vehicle 1 is traveling at a low speed (103: YES), the control process 100 proceeds to step 104. In step 104, the controller 80 permits the safing operation. This permission is to permit the safing operation at the second time point in the first period. When the safing operation is permitted in step 104, the control process 100 proceeds to step 105.

In step 105, the controller 80 executes necessity determination for determining whether the safing operation needs to be executed.

When it is determined in step 105 that the safing operation needs to be executed (105: YES), the control process 100 proceeds to step 106. In step 106, the controller 80 executes the safing operation. When the safing operation is executed in step 106, the control process 100 proceeds to step 108 and ends.

When it is determined in step 105 that the safing operation does not need to be executed (105: NO), the control process 100 proceeds to step 107. The controller 80 does not execute the safing operation in step 107, and the control process 100 proceeds to step 108 and ends. In the case where the safing operation is not executed in step 107, the controller 80 return to step 105 to repeat the necessity determination. Accordingly, it is possible to immediately execute the safing operation when a need for executing the safing operation arises.

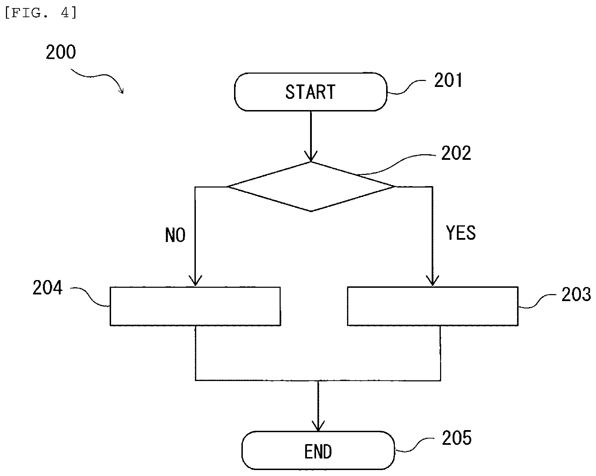

Next, a control process by the controller 80 will be described with reference to Fig. 4. Fig. 4 is a flowchart illustrating a control process 200 by the controller 80. The control process 200 is executed during the execution of the safing operation.

In step 201, the control process 200 is started.

In step 202, the controller 80 executes cancellation determination for determining whether the safing operation needs to be canceled.

When it is determined in step 202 that the safing operation needs to be canceled (202: YES), the control process 200 proceeds to step 203. In step 203, the controller 80 cancels the safing operation. When the safing operation is canceled in step 203, the control process 200 proceeds to step 205 and ends.

When it is determined in step 202 that the safing operation does not need to be canceled (202: NO), the control process 200 proceeds to step 204. In step 204, the controller 80 continuously executes the safing operation. When the safing operation is continuously executed in step 204, the control process 200 proceeds to step 205 and ends. It should be noted that the controller 80 may continuously executes the safing operation in step 204 and return to step 202 to repeat the cancellation determination.

Advantageous effects achieved by the invention will be described below.

According to an embodiment of the invention, the controller 80 of the leaning vehicle 1 executes an operation mode in which the safing operation can be executed, the safing operation being the fall-prevention operation that prevents the leaning vehicle 1 from falling over, and/or the impact reduction operation that reduces an impact applied to the leaning vehicle 1 and/or the rider 2 of the leaning vehicle 1 due to falling over of the leaning vehicle 1. During the execution of the operation mode, the controller 80 prohibits the safing operation at the first time point in the first period which is a period from when the leaning vehicle 1 starts deceleration to a time point at which the leaning vehicle 1 is brought into the stopped state or the slow-drive state by the deceleration, and permits the safing operation at the second time point after the first time point in the first period. Accordingly, the safing operation is prohibited while the leaning vehicle 1 is traveling at a speed higher than a low speed and the attitude of the leaning vehicle 1 is relatively stable, and the safing operation is permitted at the second time point at which the speed of the leaning vehicle is reduced and the attitude of the leaning vehicle 1 may become unstable. According to the invention, the traveling performance of the leaning vehicle 1 and the safety of a rider can be achieved in a compatible manner.

According to an embodiment of the invention, during the execution of the safing operation mode, the controller 80 executes necessity determination for determining whether the safing operation needs to be executed after the second time point, and does not execute the safing operation when it is determined in the necessity determination that the safing operation does not need to be executed. Accordingly, even after the safing operation is permitted, the safing operation is not executed when it is not necessary to actually execute the safing operation, whereby hindering the traveling of the leaning vehicle 1 can be avoided.

According to an embodiment of the invention, the controller 80 executes the safing operation when it is determined in the necessity determination that the safing operation needs to be executed. Then, during the execution of the safing operation, the controller 80 executes cancellation determination for determining whether the safing operation needs to be canceled, and cancels the safing operation when it is determined in the cancellation determination that the safing operation needs to be canceled. Accordingly, for example, in the case where the leaning vehicle 1 accelerates or starts during the execution of the safing operation, the safing operation can be canceled, whereby the traveling performance of the leaning vehicle 1 can be secured.

According to an embodiment of the invention, the controller 80 executes the cancellation determination during the execution of the safing operation in the first period. Accordingly, it is possible to determine whether the safing operation needs to be canceled before the leaning vehicle 1 accelerates or starts and prepare for the acceleration or the start of leaning vehicle 1.

According to an embodiment of the invention, the controller 80 executes the cancellation determination during the execution of the safing operation in the second period which is a period after the third time point at which the leaning vehicle 1 starts to accelerate or travel after or in the middle of the first period. Accordingly, it is possible to prevent the leaning vehicle 1 from falling over by the safing operation until the leaning vehicle 1 starts to accelerate or travel and the safing operation becomes unnecessary.

According to an embodiment of the invention, the first period is a period from when the leaning vehicle 1 starts automatic deceleration to automatically decelerate to a time point at which the leaning vehicle 1 is automatically brought into the stopped state or the slow-drive state by the automatic deceleration, or a period from when the leaning vehicle 1 starts the automatic deceleration to automatically decelerate to a time point at which the leaning vehicle 1 is brought into the stopped state or the slow-derive state by an operation of the rider 2. The positional relationship adjustment mode is a mode for improving the comfort of the rider 2 by reducing operations of the rider 2. Thus, even in the case where the stopping operation and/or the slow-drive operation are/is executed by the controller 80 or where the stopping operation and/or the slow-drive operation are/is executed by the rider 2 during the execution of the positional relationship adjustment mode, the controller 80 is configured to be capable of executing the safing operation mode, and thus the comfort of the positional relationship adjustment mode can be improved.

According to an embodiment of the invention, the controller 80 executes the collision prevention operation of preventing collision between the leaning vehicle 1 and a target when a collision possibility which is a possibility of the collision between the leaning vehicle 1 and the target exceeds a reference, and executes the safing operation based on the collision possibility. Accordingly, the collision possibility acquired through the collision prevention operation is used in the safing operation which is a different operation, whereby the processing performance of the controller 80 is improved.

According to an embodiment of the invention, the controller 80 executes the fall possibility determination for determining whether there is a possibility that the leaning vehicle 1 will fall over, and the vehicle falling direction determination for determining a vehicle falling direction which is a direction in which the leaning vehicle 1 will fall over. When there is a possibility that the leaning vehicle 1 will fall over, the controller 80 executes the impact reduction operation as the safing operation, and causes the safety apparatus 70 to operate in the vehicle falling direction with respect to the leaning vehicle 1 and/or the rider 2 in the impact reduction operation. Accordingly, the controller 80 can effectively reduce the impact applied to the leaning vehicle 1 and/or the rider 2 by causing the safety apparatus 70 to operate in the direction in which the leaning vehicle 1 falls over.

According to an embodiment of the invention, the controller 80 executes the rider falling direction determination for determining a rider falling direction which is a direction in which the rider 2 will fall over. In the impact reduction operation, the controller 80 causes the safety apparatus 70 provided to the wearing article 3 of the rider 2 to operate in the rider falling direction with respect to the rider 2. Accordingly, the controller 80 can effectively reduce the impact applied to the rider 2 even when the leaning vehicle 1 does not fall over and only the rider 2 falls over.

### Reference Signs List

- 1:: Leaning vehicle
- 2:: Rider
- 3:: Wearing article
- 10:: Driving apparatus
- 20:: Braking apparatus
- 30:: Vehicle behavior sensor
- 40:: Surrounding environment sensor
- 50:: Input apparatus
- 60:: Notification apparatus
- 70:: Safety apparatus
- 71:: Support apparatus
- 72:: Protective apparatus
- 73:: Protective apparatus
- 75:: State detection unit
- 80:: Controller
- 81:: Execution unit
- 82:: Acquisition unit

## Claims

1. A controller (80) for a leaning vehicle (1), the controller comprising an execution unit (81) configured to execute a safing operation mode in which a safing operation can be executed, the safing operation being a fall-prevention operation that prevents the leaning vehicle (1) from falling over, and/or an impact reduction operation that reduces an impact applied to the leaning vehicle (1) and/or a rider (2) of the leaning vehicle (1) due to falling over of the leaning vehicle (1),
wherein during execution of the safing operation mode, the execution unit (81) prohibits the safing operation at a first time point in a first period which is a period from when the leaning vehicle (1) starts deceleration to a time point at which the leaning vehicle (1) is brought into a stopped state or a slow-drive state by the deceleration, and permits the safing operation at a second time point after the first time point in the first period.

2. The controller according to claim 1, wherein at the second time point, the execution unit (81) permits the safing operation based on at least one of traveling state information which is information relating to a traveling state of the leaning vehicle (1), surrounding environment information which is information relating to an environment surrounding the leaning vehicle (1), and manual operation information which is information relating to an operation executed by the rider (2).

3. The controller according to claim 1 or 2, wherein the execution unit (81) executes necessity determination processing for determining whether the safing operation needs to be executed after the second time point during the execution of the safing operation mode, and does not execute the safing operation when it is determined in the necessity determination processing that the safing operation does not need to be executed.

4. The controller according to claim 3, wherein in the necessity determination processing, the execution unit (81) determines whether the safing operation needs to be executed based on at least one of traveling state information which is information relating to a traveling state of the leaning vehicle (1), surrounding environment information which is information relating to an environment surrounding the leaning vehicle (1), and manual operation information which is information relating to an operation executed by the rider (2).

5. The controller according to claim 3, wherein the execution unit (81) executes the safing operation when it is determined in the necessity determination processing that the safing operation needs to be executed, executes cancellation determination processing for determining whether the safing operation needs to be canceled during execution of the safing operation, and cancels the safing operation when it is determined in the cancellation determination processing that the safing operation needs to be canceled.

6. The controller according to claim 5, wherein the execution unit (81) executes the cancellation determination processing during execution of the safing operation in the first period.

7. The controller according to claim 5, wherein the execution unit (81) executes the cancellation determination processing during execution of the safing operation in a second period which is a period after a third time point at which the leaning vehicle (1) starts to accelerate or travel after or in a middle of the first period.

8. The controller according to claim 5, wherein in the cancellation determination processing, the execution unit (81) determines whether the safing operation needs to be canceled based on at least one of traveling state information which is information relating to a traveling state of the leaning vehicle (1), surrounding environment information which is information relating to an environment surrounding the leaning vehicle (1), and manual operation information which is information relating to an operation executed by the rider (2).

9. The controller according to claim 1 or 2, wherein the first period is a period from when the leaning vehicle (1) starts automatic deceleration to automatically decelerate to a time point at which the leaning vehicle (1) is automatically brought into the stopped state or the slow-drive state by the automatic deceleration, or a period from when the leaning vehicle (1) starts the automatic deceleration to automatically decelerate to a time point at which the leaning vehicle (1) is brought into the stopped state or the slow-derive state by an operation of the rider (2).

10. The controller according to claim 1 or 2, wherein the execution unit (81) executes a collision prevention operation of preventing collision between the leaning vehicle (1) and a target when a collision possibility which is a possibility of the collision between the leaning vehicle (1) and the target exceeds a reference, and executes the safing operation based on the collision possibility.

11. The controller according to claim 1 or 2, wherein the safing operation is an operation of supporting the leaning vehicle (1) as the fall-prevention operation.

12. The controller according to claim 1 or 2, wherein the safing operation is an operation of activating a safety apparatus (70) provided to the leaning vehicle (1) and/or a wearing article (3) of the rider (2) as the impact reduction operation.

13. The controller according to claim 12,
wherein the execution unit (81) executes fall possibility determination processing for determining whether there is a possibility that the leaning vehicle (1) will fall over, and vehicle falling direction determination processing for determining a vehicle falling direction which is a direction in which the leaning vehicle (1) will fall over, and
wherein the execution unit (81) executes the impact reduction operation as the safing operation when there is a possibility that the leaning vehicle (1) will fall over, and causes the safety apparatus (70) to operate in the vehicle falling direction with respect to the leaning vehicle (1) and/or the rider (2) in the impact reduction operation.

14. The controller according to claim 12, wherein the execution unit (81) executes rider falling direction determination processing for determining a rider falling direction which is a direction in which the rider (2) will fall over, and causes the safety apparatus (70) provided to the wearing article (3) of the rider (2) to operate in the rider falling direction with respect to the rider (2) in the impact reduction operation.

15. A control method for a leaning vehicle (1), the control method comprising:
causing an execution unit (81) of a controller (80) to execute a safing operation mode in which a safing operation can be executed, the safing operation being a fall-prevention operation that prevents the leaning vehicle (1) from falling over, and/or an impact reduction operation that reduces an impact applied to the leaning vehicle (1) and/or a rider (2) of the leaning vehicle (1) due to falling over of the leaning vehicle (1); and
during execution of the safing operation, causing the execution unit (81) to prohibit the safing operation at a first time point in a first period which is a period from when the leaning vehicle (1) starts deceleration to a time point at which the leaning vehicle (1) is brought into a stopped state or a slow-drive state by the deceleration, and permit the safing operation at a second time point after the first time point in the first period.
